Europäisches Patentamt

European Patent Office

Office européen des brevets

(11) Publication number: **0 138 372**
A1

# (12) EUROPEAN PATENT APPLICATION

(21) Application number: 84306163.1

(22) Date of filing: 10.09.84

(51) Int. Cl.⁴: **B 66 B 23/02**, B 65 G 23/36

(30) Priority: 15.09.83 US 532438

(43) Date of publication of application: 24.04.85 Bulletin 85/17

(84) Designated Contracting States: AT BE DE FR GB IT NL

(71) Applicant: WESTINGHOUSE ELECTRIC CORPORATION, Westinghouse Building Gateway Center, Pittsburgh Pennsylvania 15235 (US)

(72) Inventor: Coakley, Peter James, Jr., 18-7A Eagle Rock Village, Budd Lake New Jersey (US)
Inventor: Parvis, Edward Frank, 34 Jefferson Drive, Flanders New Jersey (US)
Inventor: Boltrek, Henry, 15 Wilshire Court, Freeport New York (US)

(74) Representative: van Berlyn, Ronald Gilbert, 23, Centre Heights, London, NW3 6JG (GB)

(54) Escalator.

(57) A multiple drive escalator in which at least two drive units are disposed on the inclined portion of the escalator to drive and share the dead load, represented by the conveyor, and also the live or passenger load. The drive units, are suspended on the incline via helical springs, which are compressed to predetermined like dimensions by adjusting the drive units up the incline, against the spring force, after they engage the conveyor.

EP 0 138 372 A1

1                    50,317

## ESCALATOR

### BACKGROUND OF THE INVENTION

Field of the Invention:

The invention relates in general to multiple drive escalators, and more specifically to new and improved methods and apparatus for promoting load sharing between the drive units of such escalators.

Description of the Prior Art:

U.S. Patents 3,677,388 and 3,707,220, which are assigned to the same assignee as the present application, disclose a modular drive unit, and modular passenger conveyor construction, respectively. The conveyor includes a fixed pitch rack formed of pivotally interconnected toothed links. The modular drive units are inserted into selected modules of the passenger conveyor, on the inclined portion thereof, with the number of drive units utilized being proportional to the vertical rise. For example, for a 48 inch wide escalator, a single drive unit is used up to 20 feet of rise, with an additional drive unit being added for each multiple of 20 feet rise thereafter. Each drive unit includes first and second drive chains, which engage the toothed links on first and second sides of the escalator, respectively.

When more than one drive unit is used, the drive units must be precisely adjusted such that each supports its share of the load of the running gear, i.e., steps, step axles and toothed step links. To illustrate the

criticality of drive unit spacing and adjustment, assume a three-drive unit escalator. If the drive units are initially adjusted such that each supports all of the load between it and the next lower drive unit, and the middle drive unit is then moved down the incline by only .125 inch, all of the load between the two lower drive units will be imposed on the uppermost drive unit, and the middle drive unit would support no mechanical load.

In order to assure that such a condition will not exist, the recommended adjustment of the drive units requires moving each of the drive units which are located below the uppermost drive unit slightly up the incline from the location which tensions every step link between the drives, so that one to two step links are in compression as they leave each of the lower drive units. This recommended adjustment, however, is difficult and time consuming to achieve. Calculation methods all relate to a static system, and are inaccurate due to variations in such apparatus as the escalator brake, the handrail drives, and the system friction. Further, once satisfactory drive spacing is initially achieved, the procedure must be repeated periodically in order to accommodate wear of the step link bushings, step links, and step axles.

## SUMMARY OF THE INVENTION

Briefly, the present invention relates to new and improved methods and apparatus for quickly and accurately adjusting the drive units of a multiple drive escalator, to cause substantially equal sharing of both dead and live loads, and also for automatically maintaining such load sharing during usage, notwithstanding wear of the moving parts of the escalator. The apparatus and methods include suspending the drive units on the inclined portion of the escalator on similar helical tension springs, engaging each drive unit with the conveyor portion of the escalator, and increasing the force of such engagement until the associated spring has been compressed to a predetermined dimension. Compressing all of the springs of the various drive units to the same dimension assures equal sharing of the dead load. A heavy load entering the bottom of the escalator, for example, will load the lowest drive. If the spring arrangement of the lowest drive compresses beyond the prestressed value, it will automatically pass part of the load to the next higher drive up the incline. This next higher drive may, in turn, pass load to a higher drive, if any, if the load on this drive compresses its spring significantly beyond the prestressed dimension. Thus, sharing of the live load is also achieved. In like manner, wear of the moving components of the escalator over a period of time will increase the length of the conveyor rack made up of the toothed links, step axles and link bushings. In the prior art, readjustment of the drive unit spacing would be necessary, or the drive loading would become increasingly disproportionate with increased wear. With the present invention, any load beyond a predetermined value on one drive unit increases spring compression of its associated spring, and the associated drive unit will move slightly down the incline to automatically shift part of its load to the next higher drive unit. Thus, small, momentary deflections of the drive unit springs automatically shift loads between the multiple drive units, to promote a more equal sharing of load at all times. This automatic sharing of load prevents the overloading of any one drive unit, and the overloading of any of the component parts of the escalator, greatly increasing the life of the drive chain, toothed links and link bushings.

## BRIEF DESCRIPTION OF THE DRAWINGS

The invention may be better understood, and further advantages and uses thereof more readily apparent, when considered in view of the following detailed description of exemplary embodiments, taken with the accompanying drawings, in which:

Figure 1 is an elevational view of a multiple drive escalator which may be constructed according to the teachings of the invention;

Figure 2 is a view of the escalator shown in Figure 1, taken between and in the direction of arrows II-II, with portions of the escalator being cut away in order to more clearly illustrate the teachings of the invention relative to a general embodiment thereof;

Figure 3 is a fragmentary view, in elevation, of an escalator constructed according to a preferred, more detailed embodiment of the invention;

Figure 4 is a plan view of the embodiment of the invention shown in Figure 3;

Figure 5 is a fragmentary view of the escalator shown in Figures 2, 3 and 4, illustrating a compound spring arrangement which may be used in another embodiment of the invention; and

Figure 6 illustrates the compound spring arrangement of Figure 5, with a spring seat and nut being disposed to compress the spring assembly to an operative configuration.

## DESCRIPTION OF PREFERRED EMBODIMENTS

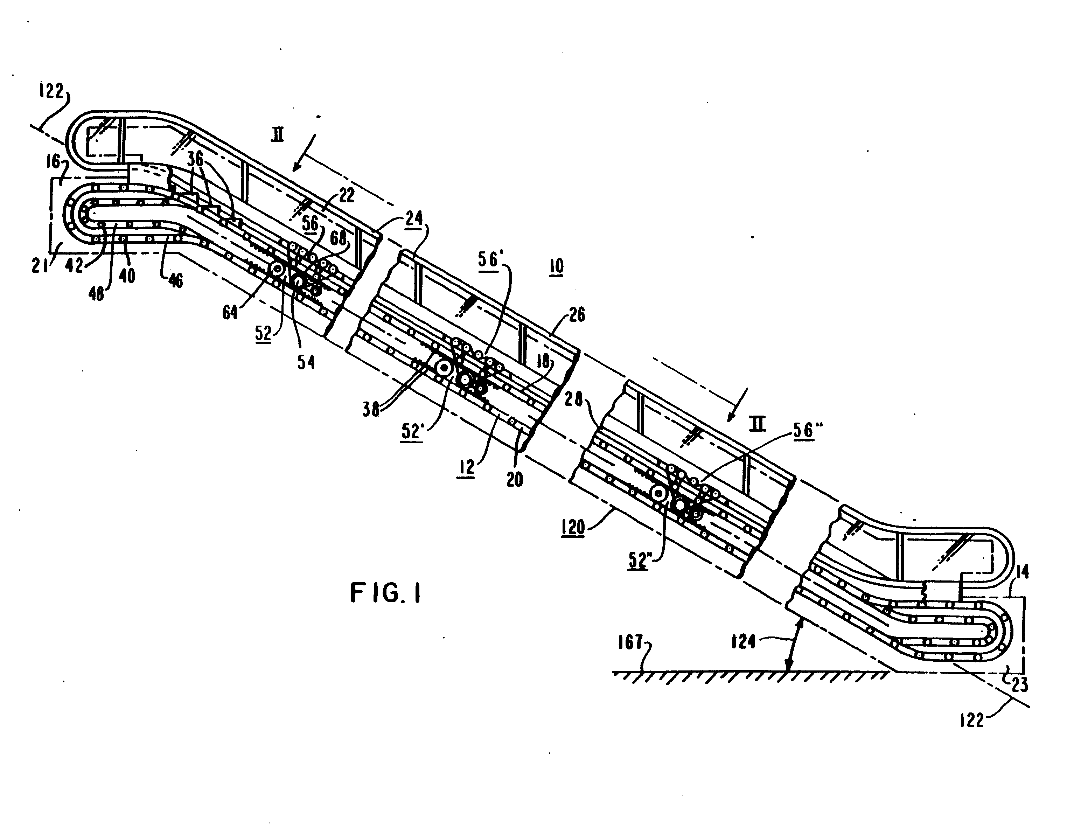

Referring now to the drawings, and to Figure 1 in particular, there is shown a multiple drive escalator 10 of the type which may utilize the teachings of the invention. Suitable modular drive units, and the modules for accepting the drive units, are fully disclosed in the hereinbefore-mentioned U.S. Patents 3,677,388 and 3,707,220. Accordingly, these patents are hereby incorporated into the present application by reference, and the description of escalator 10 will be directed to the elements which are important to the present invention.

More specifically, escalator 10 includes a conveyor or belt portion 12 for transporting passengers between a first landing 14 and a second landing 16. Conveyor 12 is of the endless articulated type, which is driven about a closed path or loop. Conveyor 12 includes an upper load bearing run 18 upon which passengers are supported while being transported between the landings 14 and 16, a lower return run 20, and upper and lower turnarounds 21 and 23, respectively, which interconnect the load bearing and return runs.

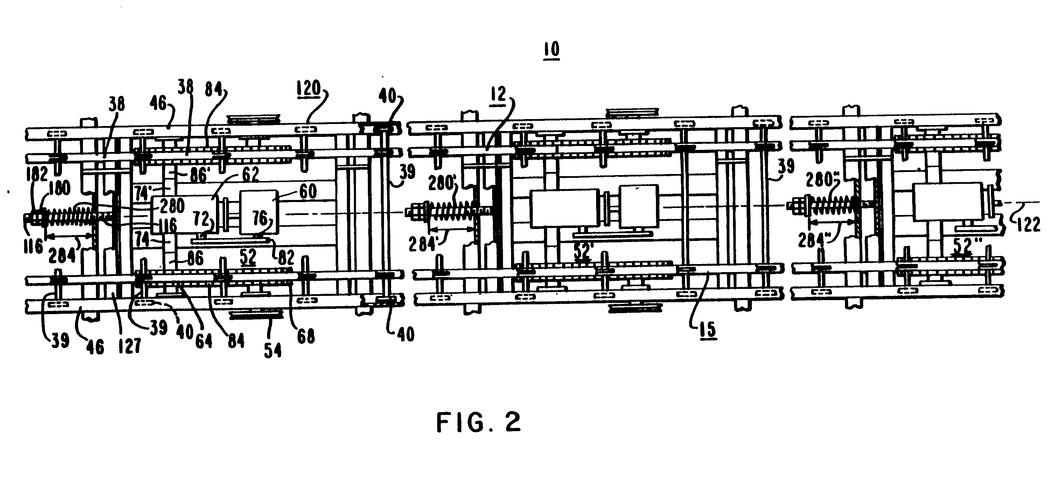

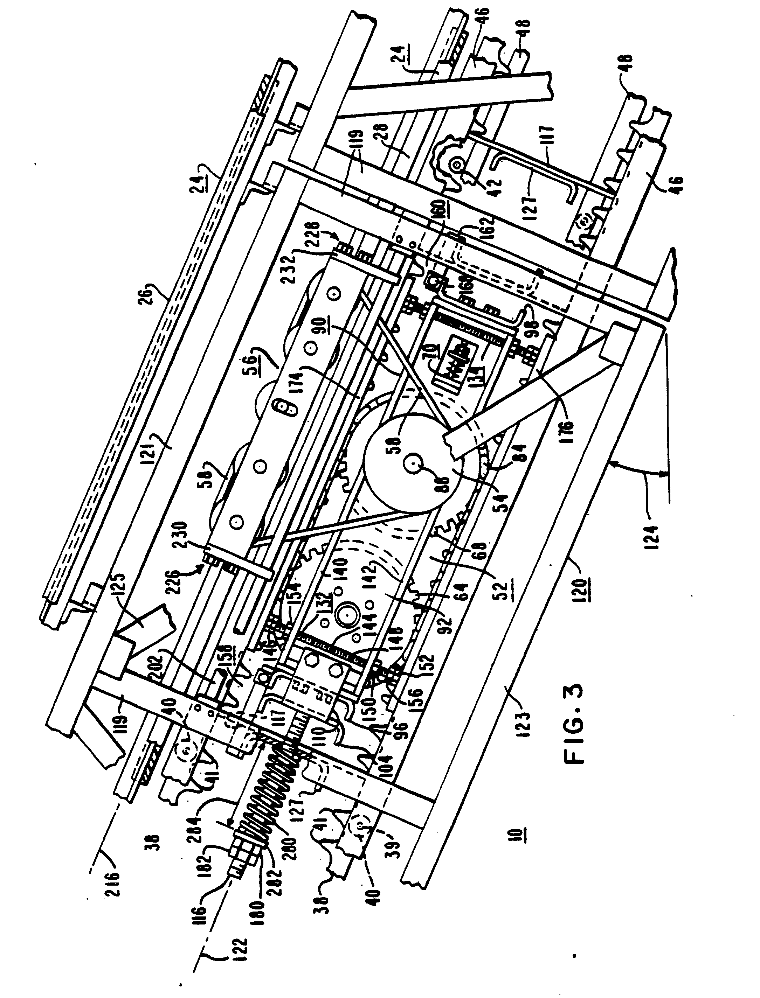

Conveyor 12 includes a plurality of steps 36, only a few of which are shown in Figure 1. Steps 36 move in a closed path, with the rise of escalator 10 being such that the conveyor 12 is driven by at least two modular drive units, with first, second and third modular drive units 52, 52' and 52'', respectively, being shown in Figure 1 for purposes of example. The drive units are supported by an inclined portion of a truss 120, best shown in Figure 3, with the uppermost drive unit 52 being mounted just below the transition between the horizontal landing portion and the inclined portion. The longitudinal axis 112 of the inclined portion of truss 120 makes an angle 124, such as 30 degrees, with a horizontal plane 16. As disclosed in detail in the incorporated U.S. Patent 3,677,388, the endless flexible conveyor 12 has first and second sides, each of which are formed of rigid, pivotally interconnected toothed step links 38. The two sides of the conveyor 12 are interconnected by step axles 39, best shown in Figure 2, which extend through link bushings (not shown). The steps 36 are connected to the step axles, such as by the arrangement set forth in U.S. Patent 3,789,972, which patent is assigned to the same assignee as the present application. The conveyor 12 is supported by guide and support rollers or wheels 40 which cooperate with guide tracks 46. The steps 36, in addition to being supported by conveyor 12, are also supported and guided by trailer wheels or rollers 42 which cooperate with trailer guide tracks 48 to guide and support the steps 36 in the endless loop, and to cause articulation of the steps between platform and step modes at the proper locations.

A balustrade 22 is disposed above the conveyor 12 for guiding a continuous flexible handrail 24. The balustrade guides the handrail 24 as it moves about a closed loop, which includes upper and lower runs 26 and 28, respectively. The modular drive units, such as drive unit 52, include a handrail drive pulley 54 mounted on a shaft 88, on each side of the conveyor 12, which drives a handrail drive unit 56 via a chain on belt 58.

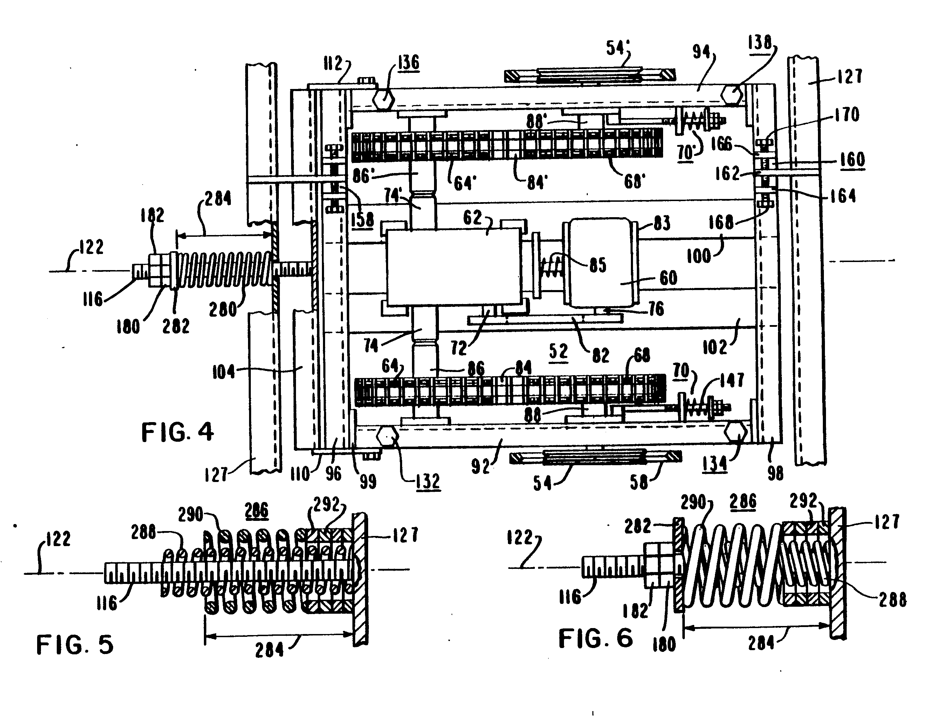

Figure 2 is a view of escalator 10 taken between and in the direction of arrows II-II in Figure 1, with Figure 2 setting forth the teachings of the invention relative to a general embodiment thereof. Portions of the escalator 10 are not shown in Figure 2, in order to more clearly illustrate the teachings of the invention. Figures 3 and 4 are fragmentary elevational and plan views, respectively, of a more detailed embodiment of the invention.

More specifically, as shown in Figure 4, drive unit 52 includes an electrical drive motor 60, such as a three-phase, 60 Hz induction motor, a gear reducer 62, a pair of spaced, driven sprocket wheels, such as sprocket wheels 64 and 64', a pair of spaced idler sprocket wheels, such as sprocket wheels 68 and 68', and a pair of drive chains, such as drive chains 84 and 84'. Each drive chain engages a driven sprocket and an idler sprocket on one side of the escalator 10. Each idler sprocket 68 and 68' is spring loaded or biased, by biasing arrangements 70 and 70', respectively, shown in Figures 3 and 4, to maintain the desired tension in the drive chain 84. The gear reducer 62, which may be a commercial gear reducer, has an input shaft 72 and output shafts 74 and 74'. The drive motor 60 has a motor shaft 76. The motor shaft 76 is coupled to the input shaft 72 of the gear reducer 62 by any suitable means, such as pulleys and a timing belt 82. The drive motor is mounted on a pad 83 biased by spring 85, which is arranged to produce and maintain a substantially constant tension in the timing belt 82.

The output shafts 74 and 74' of gear reducer 62 are connected to the spaced pair of drive sprockets 64 and 64', respectively, via suitable drive shafts 86 and 86'. Each of the driven sprockets 64 and 64' is coupled with an idler sprocket 68 and 68', respectively, via drive chains 84 and 84', respectively. The drive chains, for example, may each have three strands, with the two outer strands engaging teeth on the driven and idler sprockets, and with the inner strand engaging teeth 41 on the toothed links 38, to drive the endless belt or conveyor 12 about a guided loop. As explained in detail in incorporated U.S. Patent 3,707,220, escalator 10 includes a support truss 120. Support truss 120 is preferably formed of a plurality of modules, with Figures 3 and 4 setting forth an exemplary embodiment of a drive unit module. Construction of a module begins with the fabrication of right and left hand sections. For each of such half sections, upper and lower channel-shaped members form the main tracks 46, and upper and lower angle-shaped members form the trailer tracks 48. These members are precisely aligned with respect to one another through rigid connection to precision templates 117. The templates are provided at spaced intervals along the direction of travel of the transportation apparatus. The four track sections, held in rigid alignment by the templates, are called track assemblies.

The half sections are completed by welding truss pieces to the track assemblies. Vertical truss members 119 are welded to alternate templates 117. Upper longitudinal truss members 121 and lower longitudinal truss members 123 are then welded to the ends of the vertical truss members 119. Added rigidity is given to the structure by diagonal truss members 125, which are welded to the upper and lower longitudinal truss members 121 and 123, respectively.

The right and left hand sections are then joined together by boxing channel members or cross beams 127, which are welded to predetermined templates 117.

Figures 3 and 4 illustrate the invention applied to the escalator modular drive unit construction set forth in detail in co-pending application Serial No. _____,

filed _____, entitled "Escalator" (identified with assignee's Docket No. 50,354). In this co-pending application, drive unit 52 includes a sturdy, rigid mounting frame 90. Frame 90 includes a pair of rigid side channel members, such as members 92 and 94, and front and rear rigid cross channel members 96 and 98, respectively. The adjacent ends of the side and cross channel members are secured together, such as by welding, to create a rugged frame having a substantially rectangular configuration.

A deflection member or beam 104 is provided adjacent to the "uphill"end of the drive unit, in space relation with front cross channel 96. For example, deflection member 104 may be connected to the pair of side channel members 92 and 94 via mounting plate members, such as mounting plate members 110 and 112, which members interconnect the side channel members 92 and 94, respectively, with opposite ends of the deflection member 104. A sturdy, threaded stud 116 having first and second axial ends is provided, with its first end being fixed to substantially the midpoint of the deflection beam 104.

Instead of rigidly fixing the drive units 52, 52' and 52'' to a truss element via the stud 116, as taught by the hereinbefore-mentioned co-pending application Serial No. _____, (applicants' Docket No. 50,354), the present invention utilizes stud 116 as part of an assembly which suspends each of the drive units in the truss 120 via like helical or coil springs 280, 280' and 280''. While it is not absolutely essential that the uppermost drive unit 52 be resiliently suspended along the incline of the truss 120, in the preferred embodiment of the invention all of the drive units are so suspended. If the top drive unit has no spring, it would be difficult to determine how much of a load this drive unit is taking. It would be necessary to calculate how much load the lower drive units are taking, and to then subtract this from the total load. Thus, in order to know more precisely the loading of each drive unit, it is necessary that all drive units be resiliently suspended such that they are allowed biased movement in a direction along the incline of the escalator 10.

Instead of fixing stud 116 to a cross beam or channel member 127 of the truss 120, the stud 116 extends through an opening in cross beam 127, which opening is larger than the O.D. of the stud 116. A helical spring 280 having first and second axial ends is telescoped over the portion of stud 116 which extends outwardly past the cross beam 127, with its first end adjacent·to beam 127. A spring seat 282 is telescoped over the second end of stud 116, such that it contacts the second end of spring 280, and a nut 180 is engaged with the stud 116 and advanced to contact the spring seat 282. Nut 180 is not advanced beyond this position at this time. A locking nut 182 will be placed on ·stud 116 later, as will be hereinafter explained.

The drive unit 52, as a whole, is first correctly positioned in all directions, except in the direction of the longitudinal axis 122 of escalator 10. As disclosed in detail in co-pending application Serial No. _____, (assignee's Docket No. 50,354), the drive unit 52 may be positioned by four laterally located devices or assemblies 132, 134, 136 and 138, and by front and rear adjustment devices 158 and 160, respectively. For example, as illustrated relative to adjustment device 132 shown in Figure 3, the upper and lower flange portions 140 and 142, respectively, of side channel member 92 may have aligned openings therein for receiving a bolt 144 having a head portion 146 and a threaded shaft portion 148. The opening in flange 142 may be threaded, or a nut 150 may be welded to flange 142 adjacent to an opening. Positional adjustment is provided by tapped hex adapter 152. Lock nuts 154 and 156 secure the selected position. In the hereinbeforementioned co-pending application, assemblies 132, 134, 136 and 138 directly contact the upper and lower runs of track 46. In the present invention, these assemblies extend between and are fixed to a pair of slider bars disposed on each lateral side of frame 90, such as slider bars 174 and 176 shown in Figure 3. The slider bars permit slidable movement of the drive unit 52 along the incline via a lubricated interface between the slider bars and track 46. Care should be taken to insure that the devices 132, 134, 136 and 138 are adjusted such that freely slidable movement of the drive unit 52 is still permissible in the direction of the longitudinal axis 122, between the slider bars 174 and 176 and the track 46.

Adjustment of the frame 90 side-to-side or transverse to the travel direction, is provided by the adjustment devices 158 and 160, which are of like construction. For example, adjustment device 160 includes an elongated bar member 162 which is fixed to a boxing or cross channel member 127 of the truss 120. The longitudinal axis of bar member 162 is oriented to be parallel with the longitudinal axis 122. Adjustment device 162 further includes first and second spaced plate members 164 and 166, which are fixed to the top or upper flange of the back cross channel member 98 of the support frame 90, such that the elongated bar member 162 extends into the space between them. Tapped openings in the spaced plate members 164 and 166 receive adjustment screws 168 and 170, respectively. Adjustment screws 168 and 170 can be threadably adjusted to move frame 90 by backing one screw out and advancing the other to push against bar member 162. Then, by adjusting the non-contacting screw such that it just contacts bar member 162, the selected position can be fixed while still allowing free or unrestricted movement of the drive unit 52, as a whole, in the direction of the longitudinal axis 122.

The next and final adjustment required is the adjustment in the direction of the longitudinal axis 122. Nut 180 is advanced on stud to compress spring 280 to a predetermined compressed dimension 284. When nut 180 is initially advanced on stud 116, even after contact is made with the spring seat 282, the spring 280 will not start to compress until the drive unit 52 is pulled up the incline to the point where the teeth 41 of the toothed links 38 engage with the central strand of the drive chain 84. Further advancement of nut 180 will then start to compress the spring 280 by pulling the chain 84 into tighter and tighter engagement with the teeth 41. The force of the teeth 41 against the chain 84, will thus be proportional to the amount the spring 280 is compressed. After the desired spring compression is achieved, which is determined by measuring the compressed length of the spring, lock nut 182 is tightened against nut 180, to secure the selected position. As will be hereinafter explained, the predetermined compressed dimension 284 is easily determined, being that dimension for the specific spring used which will cause each drive unit to bear its proportionate share of the dead load of the escalator.

After spring 280 on drive unit 52 is compressed to the predetermined dimension 284, the springs on the remaining drive units are compressed to the same dimension. For example, as shown in Figure 2, spring 280' of drive unit 52' will be compressed to a dimension 284', and spring 280'' of drive unit 52'' will be compressed to a dimension 284''. Thus, substantial equal sharing of the dead escalator load by two or more drive units is quickly and easily achieved by compressing one spring arrangement per drive unit to an easily measured dimension 284.

The following example illustrates the selection of a suitable spring, and the initial compression for a drive unit installed on a 48 inch wide escalator having a rise of 32 feet. The angle 124 of the incline is 30°. The number of drive units utilized is a function of rise. The drive motor horsepower requirement is a function of width, rise and escalator speed. For a 48 inch wide escalator, one drive unit is used up to 20 feet. A second unit it then added when the rise exceeds 20 feet, and an additional drive unit is added for each additional 20 feet of rise. Thus, in the example, two drive units would be used.

The total weight of the conveyor portion 12 of the escalator 10, when unloaded, i.e., deadweight, is then determined. This is easily calculated by multiplying the number of steps 36, the number of step axles 39, the number of toothed links 38, and the number of rollers 40 and 42 by their respective per-part weights. An exemplary total deadweight for conveyor 12 in the given example is 5100 pounds. Thus, the pull on the drive units due to the deadweight is 5100 sine 30°, or 2550 pounds. If the maximum live or passenger load is 5820 pounds, for example, the maximum pull on the drive units due to the live load will be 5820 sine 30, or 2910 pounds. The maximum rated load on the drive units is the sum of the pulls due to the dead and live loads, or 5460 pounds.

Using a factor safety of 2, and a maximum desired deflection of 2.5 inches, which will easily accommodate the desired operating deflections, a suitable spring may be selected from a compression spring table. A suitable spring for the escalator set forth as an example has the following characteristics:

| Wire | - Spring steel |
|------|----------------|
| Wire Diameter | - 1.375 inches |
| Spring O.D. | - 8.0 inches |
| Spring I.D. | - 6.5 inches |
| Free Length | - 14.25 inches |
| Final Load | - 10,800 pounds |
| Total Deflection | - 2.5 inches |

The predetermined deflection for each spring may be determined from Table I

0138372

50,317

TABLE I

| L - Rise In Feet per Drive | Spring Deflection in Inches |
| --- | --- |
| 20 | .61 |
| 19 | .58 |
| 18 | .55 |
| 17 | .52 |
| 16 | .49 |
| 15 | .46 |
| 14 | .43 |
| 13 | .40 |
| 12 | .37 |
| 11 | .34 |
| 10 | .31 |
| 9 | .28 |
| 8 | .25 |

The rise in feet per drive, designated by the letter L is determined from the following expression:

$$L = T/N$$

where:    T = Total rise

N = Number of drive units

Thus, in the example, L = 32/2 or 16. From Table I, the predetermined spring deflection is .49 inch. Live load would then additionally compress the spring. For example, load according to ANSI A17.1 (American National Standard Safety Code) on every fourth step would additionally compress the spring by .17 inch, load on every other step by .37 inch, and load on every step by .67 inch. If the escalator 10 shown in Figure 1 is a 48 inch wide escalator having a total rise of 59 feet, for example, L would be equal to 59/3 or 19.7. Thus, from Table I, using 20 feet as the rise for L, the predetermined dimension 284 would be .61 inch less than the free dimension of the spring.

Thus, spring suspension of the plurality of drive units 52, having a permissible resiliency in the direction of the incline, promotes equal sharing of the dead load. It also promotes equal sharing of the live load, and it automatically accommodates lengthening of the conveyor rack formed of the toothed links 38, bushings and step axles 39. Thus, it is unnecessary to respace the drive units, at least until the wear exceeds a value which will no longer accommodate the automatic compensation range. For example, if the escalator 10 is loaded with rated live load across its length, the springs of all of the drive units will be compressed by substantially the same amount, to a value exceeding the initial compression set up to handle the dead load, but well within the maximum compression limit of the spring. If load enters the bottom of an unloaded uptraveling escalator, for example, the live load placed on the lowest drive unit will be "passed" up the incline to the other drive units, as the lowest drive unit will be moved slightly downhill by the added load. When the length of the conveyor portion of the escalator 10 lengthens due to wear, instead of most of the load being applied to the highest drive unit, which is the case when wear occurs with fixed position drive units, the drive unit with the greatest load will deflect downhill and automatically pass load to other drive units.

While a single spring 280 has been illustrated per drive unit, a nested or compound spring arrangement may also be used. Figures 5 and 6 illustrate such an embodiment of the invention, with Figure 5 illustrating a compound spring arrangement 286 in its uncompressed configuration, and with Figure 6 illustrating arrangement 286 in a compressed, operative configuration. The compound spring arrangement 286 may include first and second concentric, parallel, helical springs 288 and 290, respectively, which are wound in opposite directions to preclude locking of adjacent spring portions. The first spring 288 is longer than the second spring, it has a smaller diameter than the second spring, and it has a lower spring constant than the second spring. The longer spring 288 is used in the initial positioning of a drive unit. The relatively small force value per inch of the longer spring 288 enables more equal load sharing to be achieved, as it is not as important that the dimension 284 be precisely the same for each drive unit. In practice, all of the drive units are adjusted to provide equal predetermined deflections of the longer, smaller diameter spring 288. Then, spacers 292 are added between the beam 127 and the adjacent end of the larger spring 290, to bring spring 290 in contact with the spring seat 282. Further deflection of the assembly 286 while the escalator is operating will now be controlled by both of the springs, with this deflection being smaller per unit of load than when the longer spring 288 was initially compressed.

Since the drive units 52 will move downward slightly in the direction of longitudinal axis 122, as load is added and removed from the escalator 10, and as the conveyor 12 lengthens due to wear, the invention disclosed in co-pending application Serial No. _____, filed _____, entitled "Transportation Apparatus Having a Moving Handrail" (assignee's Docket No. 50,732), may be used to automatically move the handrail drive 56 in synchronism with the movement of the associated drive unit 52. As described in this co-pending application, the complete handrail drive unit 56 is mounted for longitudinal, slidable movement, with "longitudinal" referring to the direction of the longitudinal axis 216 of the return run 28 of the handrail 24, shown in Figure 3. Axis 216 is parallel with longitudinal axis 122 disposed through the inclined portion of the modular drive unit 52, which axis forms the angle 124 with the horizontal.

For example, the handrail drive unit 56 may be mounted for slidable movement on an elongated slide bar 202. Slide bar 202 may be fixed to the frame 90 of the modular drive unit 52, or, alternatively, it may be fixed to members of the support truss 120 of the escalator 10, as shown in Figure 3. The longitudinal ends 226 and 228 of the handrail drive assembly 56 are connected to slide hanger members 230 and 232, respectively.

The handrail drive unit 56 is held in position on the slide bar 202 by the drive chain 58. Once the handrail drive unit 56 is properly oriented, there is no further need to adjust its position up or down the incline. When the modular drive unit 52 is continuously, positionally adjusted along its longitudinal axis 122 by the spring suspension arrangement, to accommodate initial setup, changing loads, and wear, the handrail drive unit 56 will automatically adjust its position on the slide bar 202, through pressure via the handrail drive belt or chain 58, to accommodate the latest position of the drive unit 52.

In summary, the present invention discloses new and improved escalator apparatus of the type which utilizes at least first and second drive units to share the driven load. The drive units are resiliently mounted in the inclined portion of the escalator truss, with biased movement being permitted, in a predetermined range, along the incline. New and improved methods of promoting automatic load sharing of a plurality of escalator drive units are also disclosed, which include using springs to determine the sharing of dead load, and the use of the same springs to promote sharing of the live load, notwithstanding wear of the movable parts of the escalator.

0138372

17                          50,317

We claim as our invention:

1. An escalator, comprising:

a truss,

said truss including an inclined portion having a longitudinal axis inclined with respect to a horizontal plane,

a conveyor,

at least first and second drive units,

first and second mounting means mounting said first and second drive units, respectively, in spaced relation along the longitudinal axis of the inclined portion, to engage said conveyor,

at least said second mounting means including means for resiliently mounting said second drive unit along said longitudinal axis, wherein load applied to the second drive unit causes the drive unit to move in a direction which transfers part of the load to the first drive unit.

2. The escalator of claim 1 wherein the first mounting means is constructed similar to the second mounting means, including means for resiliently mounting the first drive unit along the longitudinal axis.

3. The escalator of claim 2 wherein the means for resiliently mounting each of the first and second drive units includes a compression spring, with the springs for the drive units being compressed by predetermined like dimensions when the escalator is unloaded, to cause the drive units to substantially share the dead load.

4. The escalator of claim 1 wherein the truss includes a cross beam member having an opening therein, the second mounting means includes a stud member having first and second axial ends, with the first axial end of said stud member being fixed to the uphill end of the second drive unit, and with the second axial end of the stud member extending through the opening in the cross beam member, a compression spring having first and second axial ends, said spring being telescoped over the second axial end of the stud member, with its first axial end adjacent to the cross beam member, spring seat means disposed against the second axial end of the compression spring, and a nut engaged with the stud member adjacent to said spring seat means, said nut being positioned to compress the spring between the spring seat means and the cross beam member to a predetermined dimension, when the second drive unit is engaged with the conveyor and the conveyor is unloaded.

5. The escalator of claim 2 wherein the truss includes first and second cross beam members each having an opening therein, the first and second mounting means include first and second stud members, respectively, each having first and second axial ends, with the first axial ends of said first and second stud members being fixed to the uphill ends of the first and second second drive units, respectively, with the second axial ends of the first and second stud members extending through the openings in the first and second cross beam members, respectively, first and second compression springs each having first and second axial ends, said first and second springs being telescoped over the second axial ends of the first and second stud members, with the first axial ends being adjacent to the first and second cross beam members, first and second spring seat means disposed against the second axial ends of the first and second compression springs, respectively, and first and second nuts engaged with the first and second stud members, respectively, adjacent to said first and second spring seat means, said first and second nuts being positioned to compress the first and second springs between the first and second spring seat means and the first and second cross beam members, respectively, by predetermined like dimensions, when the first and second drive units are engaged with the conveyor and the conveyor is unloaded.

6. The escalator of claim 1 wherein the means for resiliently mounting the second drive unit includes a nest of at least first and second concentric, parallel helical springs, with the free length of the first spring exceeding that of the second, and with the spring rate of the second exceeding that of the first.

7. The escalator of claim 6 wherein the first spring is compressed to a predetermined length, and including means for causing the second spring to become effective at said predetermined length.

8. A method promoting automatic load sharing on a multiple drive escalator having a conveyor, a truss for supporting the conveyor, with the truss having upper and lower horizontal portions and an intermediate inclined portion, and at least two drive units for engaging and cooperatively driving the conveyor, comprising the steps of:

suspending at least one of the drive units in the inclined portion of the truss via helical spring means,

and adjusting the position of each spring suspended drive unit to share the dead load by moving the drive unit until the drive unit engages the conveyor, and by continuing to move the drive unit until the associated spring means has been compressed by a predetermined dimension.

9. The method of claim 8 wherein the adjusting step moves the associated drive unit up the incline.

10. The method of claim 8 wherein the suspending step suspends all of the drive units via separate helical spring means, and the adjusting step moves each drive unit to compress each spring means by the same predetermined dimension.

11. The method of claim 8 wherein the spring means includes a nest of at least first and second concentric, parallel, helical springs, with the first spring having a free length which exceeds that of the second, and with the second spring having a spring rate which exceeds that of the first, and wherein the adjusting step compresses the first spring by a predetermined dimension, and including the step of causing the second spring to become effective at the predetermined dimension.

0138372

FIG. I

FIG. 2

FIG. 3

FIG. 4

FIG. 5

FIG. 6

# EUROPEAN SEARCH REPORT

0138372

. Application number

EP 84 30 6163

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-C- 551 716 (L. GRANGES) * page 5, lines 30-84; figures 22,23 * | 1,3 | B 66 B 23/02 B 65 G 23/36 |
| X | DE-C- 631 158 (WESTFALIA) * whole document * | 1-3 | |
| A | DE-B-1 189 450 (K. GREBE) * claim 1; figures 2,3 * | 1 | |
| A | DE-A-3 223 118 (MITSUBISHI) * page 7, lines 30-37; figure 4 * | 1 | |
| A | US-A-4 397 096 (WESTINGHOUSE) * abstract; figure 1 * | 1 | |
| A | FR-A-2 231 602 (HITACHI) * claim 1; figure 1 * | 1 | TECHNICAL FIELDS SEARCHED (Int. Cl.4) B 66 B 23/00 B 65 G 23/00 |

The present search report has been drawn up for all claims

| Place of search THE HAGUE | Date of completion of the search 12-12-1984 | Examiner ZAEGEL B.C. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82